# EUROPEAN PATENT SPECIFICATION

(11) **EP 4 266 527 B1**
(45) Date of publication and mention of the grant of the patent: **30.04.2025**
(21) Application number: 22207695.2
(22) Date of filing: 16.11.2022
(51) Int. Cl.: H02J 3/46, H02J 3/32, H02J 9/06

(54) **PARALLEL PHOTOVOLTAIC ENERGY STORAGE SYSTEM, CONTROL METHOD, PHOTOVOLTAIC ENERGY STORAGE MASTER AND SLAVE THEREOF**
PARALLELES FOTOVOLTAISCHES ENERGIESPEICHERSYSTEM, STEUERUNGSVERFAHREN, FOTOVOLTAISCHER ENERGIESPEICHERMASTER UND SLAVE DAFÜR
SYSTÈME DE STOCKAGE D'ÉNERGIE PHOTOVOLTAÏQUE PARALLÈLE, PROCÉDÉ DE COMMANDE, MAÎTRE DE STOCKAGE D'ÉNERGIE PHOTOVOLTAÏQUE ET ESCLAVE ASSOCIÉS

(30) Priority: 24.04.2022 CN 202210434740
(43) Date of publication of application: 25.10.2023
(73) Proprietor: Shenzhen SOFARSOLAR Co., Ltd., Shenzhen, Guangdong 518000 (CN)
(72) Inventor: GUO, Mingping, Shenzhen, 518000 (CN); JIANG, Qinyi, Shenzhen, 518000 (CN); XIAO, Rong, Shenzhen, 518000 (CN); YI, Degang, Shenzhen, 518000 (CN)
(74) Representative: Ipside

(56) References cited:
- EP-A1- 2 506 391
- WO-A1-2012/043919
- WO-A1-2017/197437
- US-A1- 2017 047 740

## Description

### Technical Field

Embodiments of the present invention relate to the technical field of photovoltaic grid connection, and in particular, relate to a parallel photovoltaic energy storage system, and a control method.

### Background of the Invention

Nowadays, many countries in the world are vigorously developing new energy sources, and photovoltaic energy storage systems are widely used as green power systems. However, most single-phase photovoltaic energy storage systems are about 5 kW. Because of different development levels at different regions and different demands of residents for energy storage systems of different power ranges, the capacity of 5kW for the energy storage systems is small in some regions. Therefore, at present, multiple photovoltaic energy storage systems are used in parallel in the market to meet the demand for power expansion, and in some regions with power shortage, the parallel systems can also support higher power of emergency power supply.

In the process of realizing the embodiments of the present invention, the inventor found that there are at least the following problems in the above-mentioned related technology: at present, the common solution in the market is to increase the communication between EMS control systems and electric meters and inverters, so as to schedule and distribute the stored energy in gird connection. However, in this solution, when the grid operates abnormally, such as in case of power failure, the data transmission is slow through two-stage communication, and parallel connection of multiple devices cannot be realized for emergency power supply.

US 2017047740 discloses a power control system includes a first inverter power control system and a second inverter power control system coupled in a parallel configuration with the first inverter power control system. Both first and second inverter power control systems may each include an input configured to receive direct current (DC) power; a DC to alternating current (AC) inverter stage configured to receive the DC power input; an anti-islanding relay coupled to the output of the DC/AC inverter stage; and a transition relay coupled to the anti-islanding relay. The transition relay may be configured to route an output of the inverter power control system between one or more onsite back-up loads and an AC grid. The first inverter power control system may be designated as a master that is configured to control the operation of the second inverter power control system designated as a slave.

WO 2017197437 discloses an apparatus for collecting solar energy in a location exposed to sunlight, converting said solar energy to electrical energy and distributing said electrical energy to a user of said electrical energy. The apparatus comprises a plurality of storage modules wherein each said storage module comprises a photovoltaic array panel, a battery for storing electrical energy produced by said panel, means to convert direct current produced by said panel, or stored in said battery, into alternating current, means to electrically connect said module to said user, and an electronic controller for controlling charging of said battery and said distribution of electrical energy to the user.

### Summary of the Invention

The invention is defined by a control method of a parallel photovoltaic energy storage system with the technical features of independent claim 1 and by a parallel photovoltaic energy storage system with the technical features of independent claim 1. Alternative embodiments of the method are defined in dependent claims 2 to 8.

Embodiments of the present application provide a parallel photovoltaic energy storage system, and a control method, a photovoltaic energy storage master and photovoltaic energy storage slaves thereof.

Objectives of the embodiments of the present invention are realized by the following technical solutions.

To solve the above technical problems, the present invention is defined by the features of the independent claims. Preferred embodiments are defined in the dependent claims.

As compared to the prior art, the present invention has the following beneficial effects: different from the prior art, the embodiments of the present invention provide a parallel photovoltaic energy storage system and a control method, a photovoltaic energy storage master and photovoltaic energy storage slaves thereof, wherein the system includes a plurality of photovoltaic modules, a grid, a plurality of loads and a plurality of photovoltaic energy storage devices. The method firstly selects one of the plurality of photovoltaic energy storage devices as the photovoltaic energy storage master and takes other photovoltaic energy storage devices as the photovoltaic energy storage slaves, and then determines whether the grid is connected to the parallel photovoltaic energy storage system. If it is connected, the grid-connected power of the grid and the power of each photovoltaic energy storage slave are adjusted so that the grid and the photovoltaic energy storage device supply power to the load; otherwise, the power of each photovoltaic energy storage slave can be adjusted so that the photovoltaic energy storage device supplies power to the load in an off-grid manner. The grid connection solution provided according to the embodiments of the present invention does not require additionally provided control systems, the scheduling and distribution of grid-connected energy can be realized simply by the photovoltaic energy storage master, and off-grid power supply can be realized rapidly in cases of abnormal operation of the grid.

### Brief description of the Drawings

One or more embodiments are illustrated by pictures in corresponding attached drawings, and this does not constitute limitation on the embodiments. Elements/modules and steps with the same reference numerals in the attached drawings are shown as similar elements/modules and steps, and the pictures in the attached drawings do not constitute scale limitation unless otherwise stated particularly.
FIG. 1 is a schematic view of one application environment for a control method of a parallel photovoltaic energy storage system provided according to an embodiment of the present invention.
FIG. 2 is a schematic view illustrating the electrical connection of isolated communication modules among photovoltaic energy storage devices in FIG. 1.
FIG. 3 is a schematic view illustrating the electrical connection of synchronous signal modules among the photovoltaic energy storage devices in FIG. 1.
FIG. 4 is a schematic flowchart diagram of a control method of a parallel photovoltaic energy storage system provided according to a first embodiment of the present invention.
FIG. 5 is a schematic flowchart diagram of another control method of a parallel photovoltaic energy storage system provided according to the first embodiment of the present invention.
FIG. 6 is a schematic flowchart diagram of another control method of a parallel photovoltaic energy storage system provided according to the first embodiment of the present invention.
FIG. 7 is a schematic flowchart diagram of yet another control method of a parallel photovoltaic energy storage system provided according to the first embodiment of the present invention.
FIG. 8 is a control schematic view of the grid-connected operation of a single-phase photovoltaic energy storage power module in the control method provided in FIG. 4.
FIG. 9 is a schematic flowchart diagram of another control method of a parallel photovoltaic energy storage system provided according to the first embodiment of the present invention.
FIG. 10 is a schematic flowchart diagram of a control method of a parallel photovoltaic energy storage system provided according to a second embodiment of the present invention.
FIG. 11 is a schematic sub-flowchart diagram of step S500 in the control method shown in FIG. 10.
FIG. 12 is a control schematic view of a PID controller in a single-phase photovoltaic energy storage power module in the second embodiment of the present invention.
FIG. 13 is another schematic sub-flowchart diagram of step S500 in the control method shown in FIG. 10.
FIG. 14 is a control schematic view of current sharing control in the single-phase photovoltaic energy storage power module in the second embodiment of the present invention.
FIG. 15 is a schematic structural diagram of a photovoltaic energy storage master provided according to a third embodiment of the present invention.
FIG. 16 is a schematic structural diagram of a photovoltaic energy storage slave provided according to a fourth embodiment of the present invention.
FIG. 17 is a schematic structural diagram of a parallel photovoltaic energy storage system provided according to a fifth embodiment of the present invention.

### Detailed Description of Embodiments

The present invention will be described in detail hereinafter with reference to specific embodiments. The following embodiments will facilitate the further understanding of the present invention by those skilled in the art, but are not intended to limit the present invention in any way. The scope of the invention is only defined by the appended claims.

In order to make objectives, technical solutions and advantages of the present application clearer, the present application will be further described in detail hereinafter with reference to attached drawings and embodiments. It shall be appreciated that, the specific embodiments described herein are only used to explain the present application, and are not used to limit the present application.

It shall be noted that, all features in the embodiments of the present invention may be combined with each other without conflict, as long as they remain within the scope claimed in the present specification.

Furthermore, words such as "first", "second", and "third" used herein do not limit the data and execution order, but only distinguish same or similar items with basically the same functions and effects. It shall be noted that, when an element is expressed as "connected" to another element, it may be directly connected to another element, or there may be one or more intervening elements therebetween.

Unless otherwise defined, all technical and scientific terms used in this specification have the same meanings as commonly understood by those skilled in the art of the present invention. In this specification, the terms used in the specification of the present invention are only for the purpose of describing specific embodiments, and are not intended to limit the present invention.

In addition, the technical features involved in various embodiments of the present invention described below can be combined with each other as long as they do not conflict with each other and they fall within the scope of the invention as defined by the appended claims.

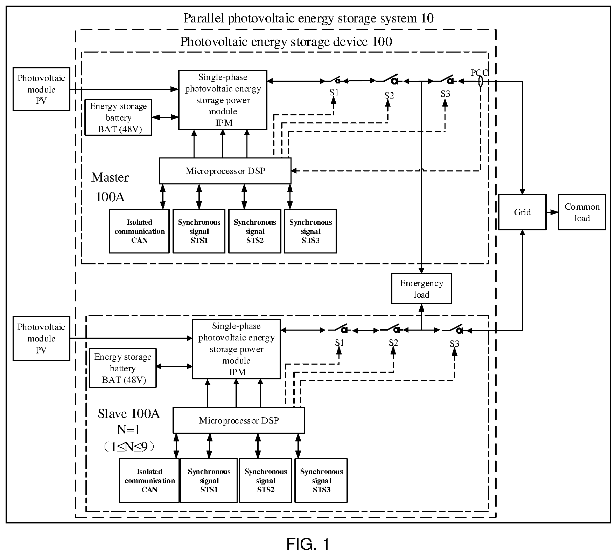

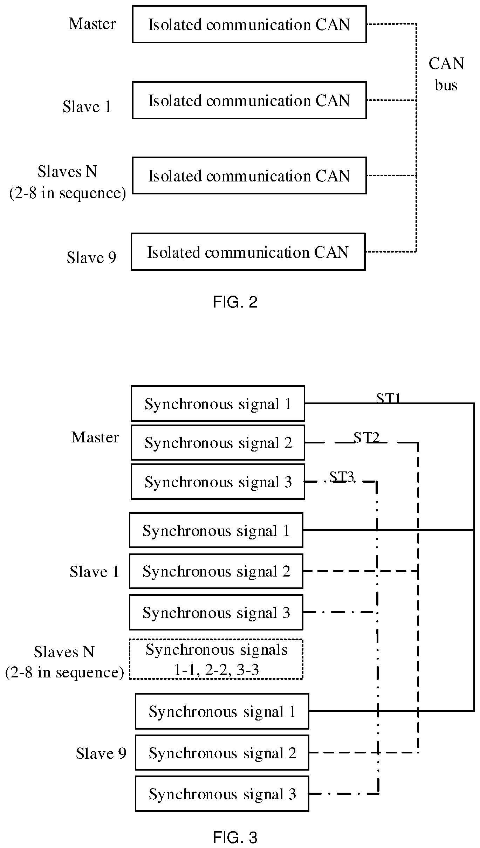

In order to solve problems of complex modules and multiple control levels of the current parallel photovoltaic energy storage system, embodiments of the present invention provide a parallel photovoltaic energy storage system and a control method, photovoltaic energy storage master and photovoltaic energy storage slaves thereof, wherein the parallel photovoltaic energy storage system has a simple structure and can realize power expansion, simple energy scheduling and distribution control as well as off-grid emergency power supply. FIG. 1 is a schematic view of one application environment for a control method of a parallel photovoltaic energy storage system provided according to an embodiment of the present invention. FIG. 2 is a schematic view illustrating the electrical connection of isolated communication modules among photovoltaic energy storage devices in FIG. 1. FIG. 3 is a schematic view illustrating the electrical connection of synchronous signal modules among the photovoltaic energy storage devices in FIG. 1. The application environment is a parallel photovoltaic energy storage system 10, which includes photovoltaic modules PV, a grid, a plurality of loads and a plurality of photovoltaic energy storage devices 100.

The photovoltaic module PV, also known as a photovoltaic generation system, is called for short as photovoltaic, and it can directly convert solar radiation energy into electric energy for electricity generation by utilizing photovoltaic effect of photovoltaic cells. In the embodiment of the present invention, the photovoltaic module PV is connected with the photovoltaic energy storage device 100 and sends the generated electric energy to the photovoltaic energy storage device 100 for further power modulation.

The grid is a whole structure composed of substations and power transmission and distribution lines of various voltages in an electric power system, which is also called a power network. It includes three units, i.e., power transformation, power transmission and power distribution units, which are used to transmit and distribute electric energy and change the voltage. In the embodiment of the present invention, the grid is used to directly supply power to at least one common load, and it can also supply power to at least one emergency load through a power module in the photovoltaic energy storage device 100.

The loads includes at least one emergency load and at least one common load, wherein the at least one emergency load is an electrical device that needs to obtain electrical energy to operate when the grid operates abnormally, e.g., in case of power failure. The at least one emergency load includes some electrical devices that cannot be powered off, for example. The at least one common load is connected with the grid, and the at least one common load is the electrical device that needs to be hung over the grid to obtain electric energy through the grid.

The photovoltaic energy storage device 100 includes a photovoltaic energy storage master 100A and photovoltaic energy storage slaves 100B. The photovoltaic energy storage master 100A and the photovoltaic energy storage slave 100B may be photovoltaic energy storage devices with identical structures. The photovoltaic energy storage master 100A is one photovoltaic energy storage device selected from the plurality of photovoltaic energy storage devices 100 to realize the overall control of grid connection, and after one photovoltaic energy storage device of the parallel photovoltaic energy storage systems 10 is selected as the photovoltaic energy storage master 100A, other photovoltaic energy storage devices are determined as the photovoltaic energy storage slaves 100B, and the number of the photovoltaic energy storage slave 100B is at least one. In the example shown in FIG. 1, the number of the photovoltaic energy storage slave 100B satisfying N=1 is taken as an example. Preferably, the number of the photovoltaic energy storage slave 100B may be 1≤N≤9.

The photovoltaic energy storage device 100 (photovoltaic energy storage master 100A/photovoltaic energy storage slave 100B) is provided therein at least with a single-phase photovoltaic energy storage power module (Power Conversion System, PCS), an energy storage battery BAT, a microprocessor DSP, an isolated communication module CAN, a synchronous signal module STS, first switch modules (S1 and S2) and a second switch module S3.

The single-phase photovoltaic energy storage power module PCS is respectively connected with the energy storage battery BAT, the photovoltaic module PV, the load and the grid, and is used for realizing energy scheduling and distribution, and at least a DC/DC converter and a DC/AC inverter are arranged in the single-phase photovoltaic energy storage power module PCS.

The energy storage battery BAT is a battery or a battery pack capable of storing energy, and is connected with the single-phase photovoltaic energy storage power module PCS to realize charging and discharging. Preferably, the energy storage battery BAT may be a battery or a battery pack with high energy density, such as a lithium battery.

The microprocessor DSP is in communication connection with the single-phase photovoltaic energy storage power module PCS, and can acquire or collect the working data of the single-phase photovoltaic energy storage power module PCS and store the working data. The microprocessor DSP can also package and output the working data, or acquire the working data of other parallel photovoltaic energy storage devices 100. The microprocessor DSP in the photovoltaic energy storage master 100A can also be connected to the point of common coupling PCC between the grid and each of the photovoltaic energy storage devices 100, so as to detect the current at the end of the grid.

The isolated communication module CAN is in communication connection with the microprocessor DSP and connected to the CAN bus, thereby realizing communication connection with other photovoltaic energy storage devices 100. The isolated communication module CAN can send data packets to other photovoltaic energy storage devices 100 through the CAN bus or acquire data packets through the CAN bus. In FIG. 2, the connection of nine photovoltaic energy storage slaves 100B and one photovoltaic energy storage master 100A is taken as an example. In the actual application scenario, the number of photovoltaic energy storage slaves 100B does not need to be limited by the present application, but can be set according to actual needs.

The synchronous signal module STS includes a first synchronous signal module STS1, a second synchronous signal module STS2 and a third synchronous signal module STS3, wherein the first synchronous signal modules STS1 in the photovoltaic energy storage devices 100 are connected by a first synchronous bus ST1, the second synchronous signal modules STS2 in the photovoltaic energy storage devices 100 are connected by a second synchronous bus ST2, and the third synchronous signal modules STS3 in the photovoltaic energy storage devices 100 are connected by a third synchronous bus ST3. The first synchronous signal module STS1 is used to control the frequency synchronization of the photovoltaic energy storage devices 100, the second synchronous signal module STS2 is used to synchronously control the first switch modules (S1 and S2) in each photovoltaic energy storage device 100, and the third synchronous signal module STS3 is used to synchronously control the second switch modules S3 in the photovoltaic energy storage devices 100. In FIG. 3, the connection of nine photovoltaic energy storage slaves 100B and one photovoltaic energy storage master 100A is taken as an example. In the actual application scenario, the numbers of the photovoltaic energy storage slaves 100B and the synchronous signal modules STS do not need to be limited by the present application, but can be set according to actual needs.

The first switch modules (S1 and S2) are used to control the connection of the single-phase photovoltaic energy storage power module PCS with the at least one emergency load, the at least one common load and the grid, and the second switch module S3 is used to control the connection of the single-phase photovoltaic energy storage power module PCS with the at least one common load and the grid. The first switch modules (S1 and S2) and the second switch module S3 may be relays. Further speaking, the first switch modules (S1 and S2) and the second switch module S3 may also be other switches, such as Insulated Gate Bipolar Transistors (IGBTs) and Metal-Oxide-Semiconductor Field-Effect Transistors (MOSFETs), which can be set specifically according to actual needs. Two first switch modules, i.e., S1 and S2, are provided in order to meet the national security standard.

Specifically, the embodiments of the present invention will be further explained below with reference to the attached drawings.

### First embodiment

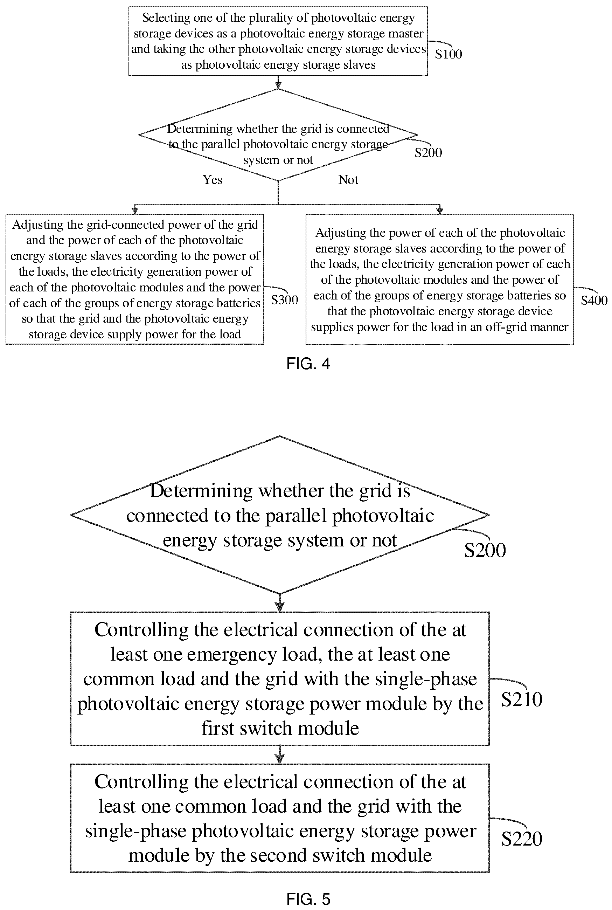

This embodiment of the present invention provides a control method of a parallel photovoltaic energy storage system, which can be applied to the parallel photovoltaic energy storage system. The parallel photovoltaic energy storage system includes a plurality of photovoltaic modules, a grid, a plurality of loads and a plurality of photovoltaic energy storage devices, and the photovoltaic energy storage devices are provided therein with energy storage batteries. The parallel photovoltaic energy storage system may be a parallel photovoltaic energy storage system as shown in the above application scenario and FIG. 1. Specifically, the control method may be executed by a photovoltaic energy storage master in the parallel photovoltaic energy storage system. Referring to FIG. 4, which shows a flowchart diagram of the control method of the parallel photovoltaic energy storage system provided according to the embodiment of the present invention, the method includes but not limited to the following steps:
Step S100: Selecting one of the plurality of photovoltaic energy storage devices as a photovoltaic energy storage master and taking the other photovoltaic energy storage devices as photovoltaic energy storage slaves.

In the embodiment of the present invention, firstly, one of the photovoltaic energy storage devices needs to be selected as the photovoltaic energy storage master to execute the control method of the following steps to realize the scheduling and distribution of the whole parallel photovoltaic energy storage system. Specifically, for the energy scheduling and distribution of the photovoltaic energy storage master and all the photovoltaic energy storage slaves, the power limitation and energy scheduling and distribution of the photovoltaic energy storage master itself are realized by the single-phase photovoltaic energy storage power module of the photovoltaic energy storage master itself, the synchronous control of the photovoltaic energy storage slaves are realized by the synchronous signal modules, and the power limitation and energy scheduling and distribution of the photovoltaic energy storage slaves are realized by the isolated communication modules.

Step S200: Determining whether the grid is connected to the parallel photovoltaic energy storage system or not; if yes, the method proceeds to step S300; if not, the method proceeds to step S400.

In the embodiment of the present invention, first it is necessary to determine whether the grid is connected to the parallel photovoltaic energy storage system, and then the working power is distributed depending on whether the grid is connected. Whether the grid is connected may be determined by detecting the existence of current in the grid through the point of common coupling between the grid and each photovoltaic energy storage device.

Moreover, the load includes at least one emergency load and at least one common load, the at least one emergency load is respectively connected with output ends of each of the photovoltaic energy storage devices, and the at least one common load is connected with the grid, wherein when the grid is connected to the parallel photovoltaic energy storage system, the grid and the photovoltaic energy storage device supply power for the at least one emergency load, and the grid further supplies power for the at least one common load; and when the grid is not connected to the parallel photovoltaic energy storage system, the photovoltaic energy storage device supplies power for the at least one emergency load.

Furthermore, each of the photovoltaic energy storage devices is provided with a single-phase photovoltaic energy storage power module and at least three synchronous signal modules, and a first switch module connected between the at least one emergency load and the single-phase photovoltaic energy storage power module and a second switch module connected between the first switch module and the grid. After determining whether the grid is connected to the parallel photovoltaic energy storage system, it is necessary to adjust the connection of each module connected to the single-phase photovoltaic energy storage power module in the photovoltaic energy storage device. Specifically, referring to FIG. 5, which shows a flowchart diagram of another control method of a parallel photovoltaic energy storage system provided according to the embodiment of the present invention, the method further includes:
Step S210: Controlling the electrical connection of the at least one emergency load, the at least one common load and the grid with the single-phase photovoltaic energy storage power module by the first switch module;
Step S220: Controlling the electrical connection of the at least one common load and the grid with the single-phase photovoltaic energy storage power module by the second switch module.

In the embodiment of the present invention, when the grid is connected to the parallel photovoltaic energy storage system, both the first switch module and the second switch module need to be turned on so as to establish the electrical connection of the at least one emergency load, the at least one common load and the grid with the single-phase photovoltaic energy storage power module. When the grid is not connected to the parallel photovoltaic energy storage system, each of the second switch modules is disconnected, and each of the first switch modules is controlled to be closed, so that the photovoltaic energy storage device supplies power for the load in the off-grid manner.

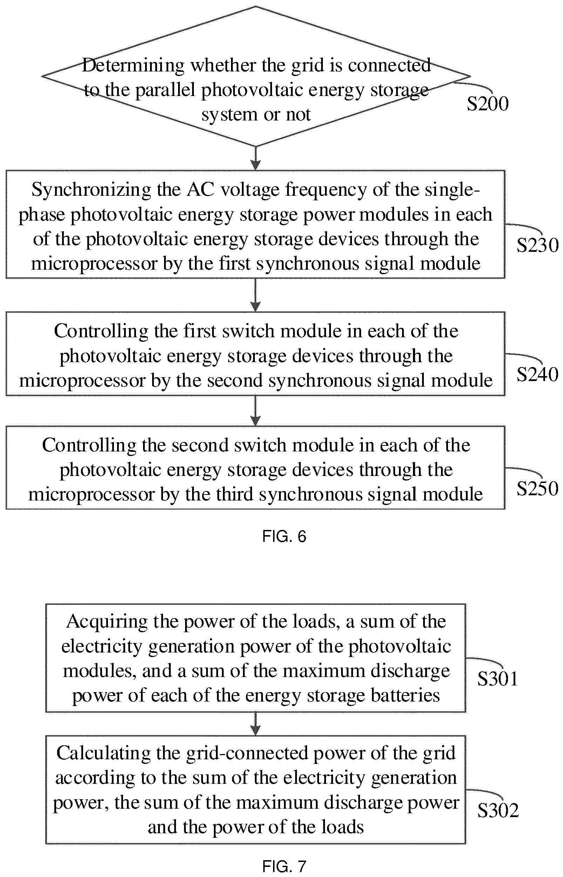

Further speaking, when the photovoltaic energy storage device includes three synchronous signal modules, the first synchronous signal modules in the photovoltaic energy storage devices are connected by a first synchronous bus, the second synchronous signal modules in the photovoltaic energy storage devices are connected by a second synchronous bus, and the third synchronous signal modules in the photovoltaic energy storage devices are connected by a third synchronous bus. In each of the photovoltaic energy storage devices, the first synchronous signal module, the second synchronous signal module and the third synchronous signal module are connected with the microprocessor in the photovoltaic energy storage device, the microprocessor is connected with the single-phase photovoltaic energy storage power module, the second synchronous signal module is further connected with the first switch module, and the third synchronous signal module is further connected with the second switch module. Referring to FIG. 6, which shows a flowchart diagram of another control method of a parallel photovoltaic energy storage system provided according to the embodiment of the present invention, the method further includes:
Step S230: Synchronizing the AC voltage frequency of the single-phase photovoltaic energy storage power modules in each of the photovoltaic energy storage devices through the microprocessor by the first synchronous signal module;
Step S240: Controlling the first switch module in each of the photovoltaic energy storage devices through the microprocessor by the second synchronous signal module; and
Step S250: Controlling the second switch module in each of the photovoltaic energy storage devices through the microprocessor by the third synchronous signal module.

In the embodiment of the present invention, specifically, the synchronous control of the photovoltaic energy storage devices can be realized by the first synchronous signal module, the second synchronous signal module and the third synchronous signal module in each of the photovoltaic energy storage devices, wherein the first synchronous signal module is used for realizing frequency synchronization, the second synchronous signal module is used for realizing synchronous control of the first switch modules, and the third synchronous signal module is used for realizing synchronous control of the second switch modules.

Step S300: Adjusting the grid-connected power of the grid and the power of each of the photovoltaic energy storage slaves according to the power of the loads, the electricity generation power of each of the photovoltaic modules and the power of each of the groups of energy storage batteries so that the grid and the photovoltaic energy storage device supply power for the load.

In the embodiment of the present invention, when the grid is connected to the parallel photovoltaic energy storage system, the grid and the photovoltaic energy storage device supply power for the at least one emergency load, and the grid further supplies power for the at least one common load.

Further speaking, before the step S300, referring to FIG. 7, which shows a flowchart diagram of yet another control method of a parallel photovoltaic energy storage system provided according to the embodiment of the present invention, the calculation of the grid-connected power of the grid for adjusting the grid specifically includes:
Step S301: Acquiring the power of the loads, a sum of the electricity generation power of the photovoltaic modules, and a sum of the maximum discharge power of each of the energy storage batteries;
Step S302: Calculating the grid-connected power of the grid according to the sum of the electricity generation power, the sum of the maximum discharge power and the power of the loads.

The step S301 specifically includes: determining the maximum discharge power of each of the groups of energy storage batteries in the energy storage devices according to a preset constant power charge and discharge instruction. In the embodiment of the present invention, after obtaining the power Pload of the load, the sum (P0+P1+...+Pn) of the electricity generation power of the photovoltaic energy storage devices, and the sum (Pb+Pb1 +...+Pbn) of the maximum discharge power of the energy storage batteries in each of the photovoltaic energy storage devices, the grid-connected power Pgrid = (P0+P1 +...+Pn) - Pload - (Pb0+Pb1+...+Pbn) of the grid can be calculated, wherein P0 represents the electricity generation power of the photovoltaic energy storage master, P1 to Pn represent the electricity generation power of the photovoltaic energy storage slaves, Pb0 represents the maximum discharge power of the energy storage batteries in the photovoltaic energy storage master, Pb1 to Pbn represent the maximum discharge power of the energy storage batteries in each of the photovoltaic energy storage slaves, and Pgrid represent the grid-connected power of the grid.

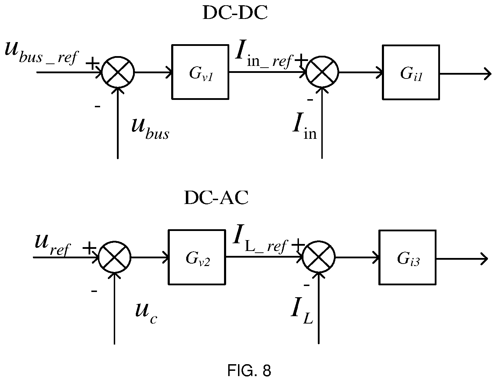

In addition, the photovoltaic energy storage devices are further provided therein with isolated communication modules, which are connected to the CAN bus to realize the communication connection of the photovoltaic energy storage devices. In order to control the grid-connected power of the grid, the grid-connected power of the grid may be sent to the grid so that the grid adjusts the current grid-connected working power. Specifically, please refer to FIG. 8, which shows a control schematic view of the grid-connected operation of a single-phase photovoltaic energy storage power module in the control method provided in FIG. 4 according to the embodiment of the present invention. In the DC-DC part, Ubus_ref is a voltage reference value, Ubus is a voltage feedback value, lin_ref is a current reference value, and lin is a current feedback value. In the DC-AC part, Uref is a voltage reference value, Uc is a voltage feedback value, II_ref is a current reference value and II is a current feedback value. The DC/DC control is composed of an input current inner loop, and the DC-AC inverter control is composed of a current outer loop at the grid side and an inductor current inner loop, wherein the current instruction at the grid side is the output of the DC bus loop.

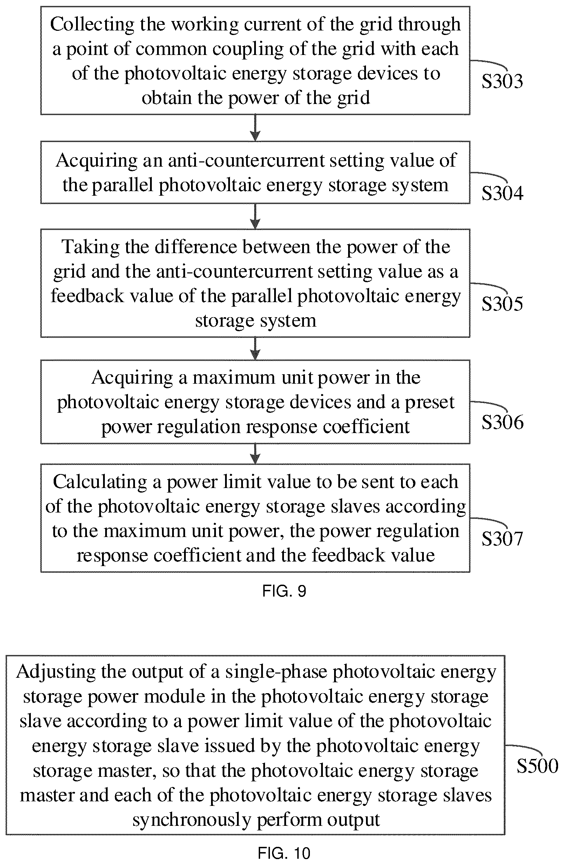

Further speaking, before the step S300, referring to FIG. 9, which shows a flowchart diagram of another control method of a parallel photovoltaic energy storage system provided according to the embodiment of the present invention, the calculation of the power limit value for adjusting the power of each of the photovoltaic energy storage slaves specifically includes:
Step S303: Collecting the working current of the grid through a point of common coupling of the grid with each of the photovoltaic energy storage devices to obtain the power of the grid;
Step S304: Acquiring an anti-countercurrent setting value of the parallel photovoltaic energy storage system;
Step S305: Taking the difference between the power of the grid and the anti-countercurrent setting value as a feedback value of the parallel photovoltaic energy storage system;
Step S306: Acquiring a maximum unit power in the photovoltaic energy storage devices and a preset power regulation response coefficient;

Step S307: Calculating a power limit value to be sent to each of the photovoltaic energy storage slaves according to the maximum unit power, the power regulation response coefficient and the feedback value.

In the embodiment of the present invention, firstly, the working current of the grid may be collected by the point of common coupling PCC as shown in FIG. 1, and the current power of the grid may be calculated by the power formula P=IU according to the voltage of the grid connected, wherein the point of common coupling PCC may collect the current data by an electric meter or a current sensor, and the voltage of the grid varies according to the type of the grid and it is a determined value, for example, the commercial power is usually 220V. Secondly, the difference between the power of the grid and the anti-countercurrent setting value is taken as a feedback value Perr of the parallel photovoltaic energy storage system. Next, the unit power of the photovoltaic energy storage master and all the photovoltaic energy storage slaves in the photovoltaic energy storage devices is compared to obtain the maximum unit power Pmax. Then, the preset power regulation response coefficient Kp is acquired, and the value thereof may be set according to actual needs. Finally, a power limit value Pflux=Pmax-Kp*Perr to be sent to each of the photovoltaic energy storage slaves is calculated according to the maximum unit power, the power regulation response coefficient and the feedback value.

In addition, the photovoltaic energy storage devices are further provided therein with isolated communication modules, which are connected to the CAN bus to realize the communication connection of the photovoltaic energy storage devices. In order to control the power of the photovoltaic energy storage slaves, the power limit value of each of the photovoltaic energy storage slaves may be sent to the photovoltaic energy storage slave so that the photovoltaic energy storage slaves respectively adjust the power thereof.

Step S400: Adjusting the power of each of the photovoltaic energy storage slaves according to the power of the loads, the electricity generation power of each of the photovoltaic modules and the power of each of the groups of energy storage batteries so that the photovoltaic energy storage device supplies power for the load in an off-grid manner.

In the embodiment of the present invention, when the grid is not connected to the parallel photovoltaic energy storage system, the photovoltaic energy storage device supplies power for the at least one emergency load. Specifically, each of the second switch modules is disconnected, and each of the first switch modules is controlled to be closed so that the photovoltaic energy storage device supplies power for the load in an off-grid manner.

In addition, similarly to the above steps S300 and S301 to S309, the power limit value of each of the photovoltaic energy storage slaves can be determined by eliminating the power calculation of the grid and the calculation of parameters related to the grid, and then the power limit value of each of the photovoltaic energy storage slaves is sent to the photovoltaic energy storage slave to adjust the power of each of the photovoltaic energy storage slaves respectively, so that the photovoltaic energy storage device supplies power for the load in the off-grid manner.

### Second embodiment

This embodiment of the present invention provides a control method of a parallel photovoltaic energy storage system, which can be applied to photovoltaic energy storage slaves in the parallel photovoltaic energy storage system. The parallel photovoltaic energy storage system includes a plurality of photovoltaic modules, a grid, a plurality of loads, a plurality of energy storage batteries and a plurality of photovoltaic energy storage devices. One of the plurality of photovoltaic energy storage devices is a photovoltaic energy storage master, and other photovoltaic energy storage devices are photovoltaic energy storage slaves. The parallel photovoltaic energy storage system may be a parallel photovoltaic energy storage system as shown in the above application scenario and FIG. 1. Specifically, the control method may be executed by the photovoltaic energy storage slaves in the parallel photovoltaic energy storage system. Referring to FIG. 10, which shows a flowchart diagram of a control method of a parallel photovoltaic energy storage system provided according to the embodiment of the present invention, the method includes but not limited to the following steps:
Step S500: Adjusting the output of a single-phase photovoltaic energy storage power module in the photovoltaic energy storage slave according to a power limit value of the photovoltaic energy storage slave issued by the photovoltaic energy storage master, so that the photovoltaic energy storage master and each of the photovoltaic energy storage slaves synchronously perform output.

In the embodiment of the present invention, after receiving the power limit value issued by the photovoltaic energy storage master, the photovoltaic energy storage slave adjusts the output of the single-phase photovoltaic energy storage power module in the photovoltaic energy storage slave according to the power limit value, so as to adjust the output power of the photovoltaic energy storage slave and realize the synchronous and balanced output of the photovoltaic energy storage master and other photovoltaic energy storage devices in the parallel photovoltaic energy storage system.

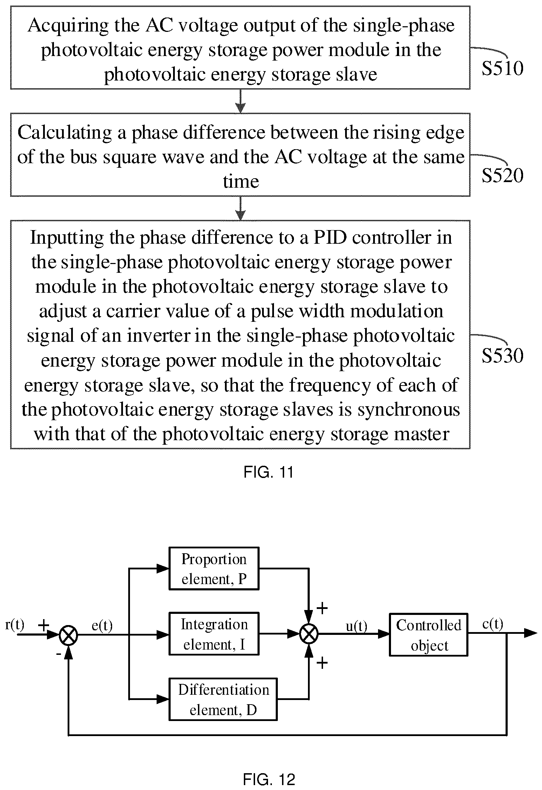

In some embodiments, each of the photovoltaic energy storage devices is provided with a first synchronous signal module, which is connected to a first synchronous bus to acquire a bus square wave through the first synchronous bus. Referring to FIG. 11, which shows a sub-flowchart diagram of step S500 in the control method shown in FIG. 10, the operation of adjusting the output of a single-phase photovoltaic energy storage power module in the photovoltaic energy storage slave so that the photovoltaic energy storage master and each of the photovoltaic energy storage slaves synchronously perform output specifically includes:
Step S510: Acquiring the AC voltage output of the single-phase photovoltaic energy storage power module in the photovoltaic energy storage slave;
Step S520: Calculating a phase difference between the rising edge of the bus square wave and the AC voltage at the same time;
Step S530: Inputting the phase difference to a PID controller in the single-phase photovoltaic energy storage power module in the photovoltaic energy storage slave to adjust a carrier value of a pulse width modulation signal of an inverter in the single-phase photovoltaic energy storage power module in the photovoltaic energy storage slave, so that the frequency of each of the photovoltaic energy storage slaves is synchronous with that of the photovoltaic energy storage master.

In the embodiment of the present invention, the bus square wave frequency is acquired through the first synchronous bus. Please refer to FIG. 12 together, which shows a control principle of a PID controller in a single-phase photovoltaic energy storage power module. In FIG. 12, r(t) is an input reference signal of a PI controller, e(t) is a feedback signal, u(t) is a control quantity, and c(t) is an output quantity. The inverter in the single-phase photovoltaic energy storage power module in each photovoltaic energy storage slave sends out a square wave with the same frequency as its own output AC voltage, and then takes back the signal on the synchronous bus after "wired-AND", detects and calculates the phase difference between the square wave frequency of the bus and its own output AC voltage frequency, and then outputs the phase difference through the PID controller to adjust the PWM carrier value, thereby realizing frequency synchronization.

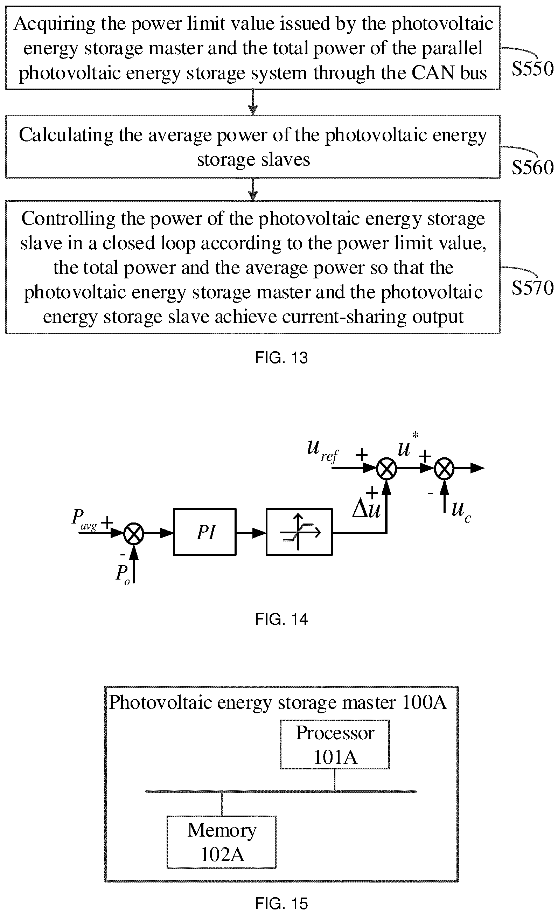

In some embodiments, each of the photovoltaic energy storage devices is provided with an isolated communication module, which is connected to the CAN bus. Referring to FIG. 13, which shows another sub-flowchart diagram of step S500 in the control method shown in FIG. 10, the operation of adjusting the output of a single-phase photovoltaic energy storage power module in the photovoltaic energy storage slave so that the photovoltaic energy storage master and the photovoltaic energy storage devices in other photovoltaic energy storage systems synchronously perform output specifically includes:
Step S550: Acquiring the power limit value issued by the photovoltaic energy storage master and the total power of the parallel photovoltaic energy storage system through the CAN bus;
Step S560: Calculating the average power of the photovoltaic energy storage slaves;
Step S570: Controlling the power of the photovoltaic energy storage slave in a closed loop according to the power limit value, the total power and the average power so that the photovoltaic energy storage master and the photovoltaic energy storage slave achieve current-sharing output.

In the embodiment of the present invention, please refer to FIG. 14 together, which shows a control principle of current sharing control in the single-phase photovoltaic energy storage power module. Each photovoltaic energy storage slave independently calculates its own average power, and then sends the average power to other photovoltaic energy storage slaves through the CAN bus, the other photovoltaic energy storage slaves respectively calculate the total power and the power instruction, and then perform power closed-loop control, wherein the adjustment of the current sharing control described above is performed once every fundamental wave period.

### Third embodiment

This embodiment of the present invention further provides a photovoltaic energy storage master 100A. Please refer to FIG. 15, which shows the hardware structure of the photovoltaic energy storage master 100A capable of executing the control method described in FIG. 4 to FIG. 9. The photovoltaic energy storage master 100A may be the photovoltaic energy storage master 100A shown in FIG. 1.

The photovoltaic energy storage master 100A includes at least one processor 101A; and a memory 102A communicatively connected to the at least one processor 101A. One processor 101A is taken as an example in FIG. 15. The memory 102A stores instructions executable by the at least one processor 101A, and the instructions, when executed by the at least one processor 101A, enable the at least one processor 101A to execute the control method described above in FIG. 4 to FIG. 9. The processor 101A and the memory 102A may be connected by a bus or other means, and the bus connection is taken as an example in FIG. 15.

As a nonvolatile computer readable storage medium, the memory 102A may be used to store nonvolatile software programs, nonvolatile computer executable programs and modules, such as program instructions/modules corresponding to the control method in the embodiments of the present application. The processor 101A executes various functional applications and data processing of the server, i.e., implement the control method provided by the above embodiments of the method, by running the nonvolatile software programs, instructions and modules stored in the memory 102A.

The memory 102A may include a program storage area and a data storage area, wherein the program storage area may store operating systems and application programs required by at least one function; and the data storage area may store data created according to the use of the control device or the like. In addition, the memory 102A may include a high-speed random access memory, and may also include a nonvolatile memory, such as at least one magnetic disk memory device, flash memory device, or other nonvolatile solid-state memory device. In some embodiments, the memory 102A optionally includes memories remotely provided relative to the processor 101A, and these remote memories may be connected to the control device through a network. Examples of the above network include, but not limited to, the Internet, Intranet, local area networks, mobile communication networks and combinations thereof.

The one or more modules are stored in the memory 102A, and when executed by the one or more processors 101A, the one or more modules execute the control method in any of the embodiments of the methods described above, e.g., execute the steps of the methods of FIG. 4 to FIG. 9 described above.

The products described above may execute the methods provided according to the embodiments of the present application, and have corresponding functional modules and beneficial effects for executing the methods. For technical details not described in detail in this embodiment, reference may be made to the method provided according to the embodiments of the present application.

An embodiment of the present application further provides a nonvolatile computer readable storage medium, in which computer executable instructions are stored. The computer executable instructions are executed by one or more processors to for example execute the steps of the methods of FIG. 4 to FIG. 9 described above.

An embodiment of the present application further provides a computer program product, which includes a computer program stored on a nonvolatile computer readable storage medium. The computer program includes program instructions which, when executed by a computer, enable the computer to execute the control method in any of the embodiments of the methods described above, e.g., execute the steps of the methods of FIG. 4 to FIG. 9 described above.

### Fourth embodiment

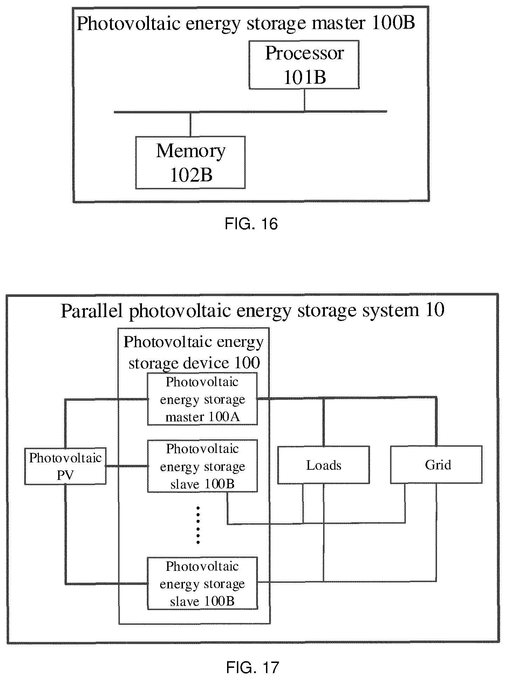

This embodiment of the present invention further provides a photovoltaic energy storage slave 100B. Please refer to FIG. 16, which shows the hardware structure of the photovoltaic energy storage slave 100B capable of executing the control method described in FIG. 10 to FIG. 14. The photovoltaic energy storage slave 100B may be the photovoltaic energy storage slave 100B shown in FIG. 1.

The photovoltaic energy storage slave 100B includes at least one processor 101B; and a memory 102B communicatively connected with the at least one processor 101B. One processor 101B is taken as an example in FIG. 15. The memory 102B stores instructions executable by the at least one processor 101B, and the instructions, when executed by the at least one processor 101B, enable the at least one processor 101B to execute the control method described above in FIG. 10 to FIG. 14. The processor 101B and the memory 102B may be connected by a bus or other means, and the bus connection is taken as an example in FIG. 16.

As a nonvolatile computer readable storage medium, the memory 102B may be used to store nonvolatile software programs, nonvolatile computer executable programs and modules, such as program instructions/modules corresponding to the control method in the embodiments of the present application. The processor 101B executes various functional applications and data processing of the server, i.e., implement the control method provided by the above embodiments of the method, by running the nonvolatile software programs, instructions and modules stored in the memory 102B.

The memory 102B may include a program storage area and a data storage area, wherein the program storage area may store operating systems and application programs required by at least one function; and the data storage area may store data created according to the use of the control device or the like. In addition, the memory 102B may include a high-speed random access memory, and may also include a nonvolatile memory, such as at least one magnetic disk memory device, flash memory device, or other nonvolatile solid-state memory device. In some embodiments, the memory 102B optionally includes memories remotely provided relative to the processor 101B, and these remote memories may be connected to the control device through a network. Examples of the above network include, but not limited to, the Internet, Intranet, local area networks, mobile communication networks and combinations thereof.

The one or more modules are stored in the memory 102B, and when executed by the one or more processors 101B, the one or more modules execute the control method in any of the embodiments of the methods described above, e.g., execute the steps of the methods of FIG. 10 to FIG. 14 described above.

The products described above may execute the methods provided according to the embodiments of the present application, and have corresponding functional modules and beneficial effects for executing the methods. For technical details not described in detail in this embodiment, reference may be made to the method provided according to the embodiments of the present application.

An embodiment of the present application further provides a nonvolatile computer readable storage medium, in which computer executable instructions are stored. The computer executable instructions are executed by one or more processors to for example execute the steps of the methods of FIG. 10 to FIG. 14 described above.

An embodiment of the present application further provides a computer program product, which includes a computer program stored on a nonvolatile computer readable storage medium. The computer program includes program instructions which, when executed by a computer, enable the computer to execute the control method in any of the embodiments of the methods described above, e.g., execute the steps of the methods of FIG. 10 to FIG. 14 described above.

### Fifth embodiment

This embodiment of the present invention provides a parallel photovoltaic energy storage system. Please refer to FIG. 17, which shows the structure of a parallel photovoltaic energy storage system 10 applied in the embodiment of the present invention. The parallel photovoltaic energy storage system 10 includes photovoltaic modules PV, a grid, a plurality of load and a plurality of photovoltaic energy storage devices 100. The photovoltaic modules PV, the grid and the loads are respectively connected with the plurality of photovoltaic energy storage devices 100, and the photovoltaic energy storage devices 100 include one photovoltaic energy storage master 100A as described in the third embodiment, and a plurality of photovoltaic energy storage slaves 100B as described in the fourth embodiment.

The parallel photovoltaic energy storage system 10 may be the parallel photovoltaic energy storage system 10 as described in the above application scenario and FIG. 1 to FIG. 3. Specifically, reference may be made to the above application scenario and FIG. 1 to FIG. 3, and this will not be described in detail herein.

The photovoltaic energy storage master 100A can execute the control method as described in the first embodiment, and has the structure as described in the third embodiment. Specifically, reference may be made to the first embodiment and the third embodiment described above, and this will not be described in detail herein.

The photovoltaic energy storage slave 100B can execute the control method as described in the second embodiment, and has the structure as shown in the fourth embodiment. Specifically, reference may be made to the second embodiment and the fourth embodiment described above, and this will not be described in detail herein.

Embodiments of the present invention provide a parallel photovoltaic energy storage system and the control method, the photovoltaic energy storage master and the photovoltaic energy storage slave structures thereof. The system includes a plurality of photovoltaic modules, a grid, a plurality of loads and a plurality of photovoltaic energy storage devices. The method firstly selects one of the photovoltaic energy storage devices as the photovoltaic energy storage master and takes other photovoltaic energy storage devices as the photovoltaic energy storage slaves, and then determines whether the grid is connected to the parallel photovoltaic energy storage system. If it is connected, the grid-connected power of the grid and the power of each photovoltaic energy storage slave are adjusted so that the grid and the photovoltaic energy storage device supply power to the load; otherwise, the power of each photovoltaic energy storage slave can be adjusted so that the photovoltaic energy storage device supply power to the load in an off-grid manner. The grid connection solution provided according to the embodiments of the present invention does not require additionally provided control systems, the scheduling and distribution of grid-connected energy can be realized simply by the photovoltaic energy storage master, and off-grid power supply can be realized rapidly in cases of abnormal operation of the grid.

It shall be noted that, the embodiments of the devices described above are only for illustrative purpose. The units illustrated as separate components may be or may not be physically separated, and components displayed as units may be or may not be physical units. Some or all of the modules may be selected according to actual needs to achieve the purpose of the solution of the embodiment.

From the description of the above embodiments, those of ordinary skill in the art may clearly appreciate that each embodiment may be realized by means of software plus a general hardware platform, and of course, it may also be realized by hardware. As shall be appreciated by those of ordinary skill in the art, the implementation of all or part of the processes in the embodiments of the methods described above may be completed by instructing related hardware through a computer program, and the program may be stored in a computer readable storage medium. When it is executed, the program may include the processes of the embodiments of the methods described above. The storage medium may be a magnetic disk, an optical disk, a Read-Only Memory (ROM) or a Random Access Memory (RAM) or the like.

Finally, it shall be noted that, the above embodiments are only used to illustrate the technical solutions of the present invention, and are not intended to limit the present invention, which is only limited by the scope of the appended claims.

## Claims

1. A control method of a parallel photovoltaic energy storage system(10) comprising a plurality of photovoltaic energy storage devices(100), each device of the plurality of photovoltaic energy storage devices (100) is paired to a photovoltaic module (PV) by means of a single-phase photovoltaic energy storage power module (IPM) and comprises a group of energy storage batteries and the plurality of photovoltaic energy storage devices(100) of the parallel photovoltaic energy storage system(10) being adapted to be connected in parallel to an AC grid via respective points of common coupling (PCC) and to plurality of loads, wherein the loads comprise at least one emergency load and at least one common load, wherein each of the at least one emergency load is connected with the output ends of each device of the plurality of photovoltaic energy storage devices (100), and the at least one common load is connected with the AC grid,
wherein the method comprises:
selecting one of the plurality of photovoltaic energy storage devices (100) as a photovoltaic energy storage master(100A) and taking the other photovoltaic energy storage devices (100) as photovoltaic energy storage slaves (100B);
executing following steps by the photovoltaic energy storage master(100A):
determining whether the grid is connected to the parallel photovoltaic energy storage system (10) or not;
when the grid is connected to the parallel photovoltaic energy storage system (10), acquiring the power of the loads, a sum of the electricity generation power of the photovoltaic modules (PV), and a sum of the maximum discharge power of each of the energy storage batteries;
calculating a grid-connected power of the grid according to the sum of the electricity generation power, the sum of the maximum discharge power and the power of the loads;
adjusting the grid-connected power of the grid and a output power of each of the photovoltaic energy storage slaves(100B) according to the power of the loads, the electricity generation power of each of the respective photovoltaic modules(PV) and the power of each of the respective groups of energy storage batteries so that the grid, the photovoltaic energy storage master(100A) and the photovoltaic energy storage slaves (100B) supply power for the at least one emergency load,
and the grid further supplies power for the at least one common load,
wherein the operation of adjusting the output power of each of the photovoltaic energy storage slaves(100B) comprises:
collecting the working current of the grid through the point of common coupling (PCC) of the grid with each of the photovoltaic energy storage devices (100) to obtain a power of the grid;
acquiring an anti-countercurrent setting value of the parallel photovoltaic energy storage system(10), taking the difference between the power of the grid and the anti-countercurrent setting value as a feedback value of the parallel photovoltaic energy storage system(10);
acquiring a maximum unit power in the photovoltaic energy storage devices(100) and a preset power regulation response coefficient;
calculating a power limit value to be sent to each of the photovoltaic energy storage slaves(100B) according to the maximum unit power, the power regulation response coefficient and the feedback value ;
when the grid is not connected to the parallel photovoltaic energy storage system(10), adjusting the output power of each of the photovoltaic energy storage slaves(100B) according to the power of the loads, the electricity generation power of each of the photovoltaic modules(PV) and the power of each of the groups of energy storage batteries so that the photovoltaic energy storage master(100A) and the photovoltaic energy storage slaves (100B) supply power for the at least one emergency load in an off-grid manner;
executing following steps by the photovoltaic energy storage slaves (100B):
adjusting the output of the single-phase photovoltaic energy storage power module (IPM) in the photovoltaic energy storage slave(100B) according to the power limit value of the photovoltaic energy storage slave(100B) issued by the photovoltaic energy storage master(100A), so that the photovoltaic energy storage master(100A) and each of the photovoltaic energy storage slaves(100B) synchronously perform output.

2. The control method according to Claim 1, wherein each device of the photovoltaic energy storage devices(100) is provided with at least three synchronous signal modules(STS), and a first switch module(S1 and S2) connected between the at least one emergency load and the single-phase photovoltaic energy storage power module(IPM) and a second switch module(S3) connected between the first switch module(S1 and S2) and the grid; the method further comprising:
executing following steps by the photovoltaic energy storage master(100A):
controlling the electrical connection of the at least one emergency load, the at least one common load and the grid with the single-phase photovoltaic energy storage power module (IPM) by the first switch module (S1 and S2);
controlling the electrical connection of the at least one common load and the grid with the single-phase photovoltaic energy storage power module (IPM) by the second switch module(S3).

3. The control method according to Claim 2, wherein when the photovoltaic energy storage device(100) comprises three synchronous signal modules(STS), the first synchronous signal modules(STS1) in each of the photovoltaic energy storage devices(100) are connected by a first synchronous bus, the second synchronous signal modules(STS2) in each of the photovoltaic energy storage devices(100) are connected by a second synchronous bus, and the third synchronous signal modules(STS3) in each of the photovoltaic energy storage devices(100) are connected by a third synchronous bus,
in each of the photovoltaic energy storage devices(100), the first synchronous signal module(STS1), the second synchronous signal module(STS2) and the third synchronous signal module(STS3) are connected with a microprocessor(DSP) in the photovoltaic energy storage device(100), and the microprocessor(DSP) is connected with the single-phase photovoltaic energy storage power module(IPM),
the method further comprising:
executing following steps by the photovoltaic energy storage master(100A):
synchronizing the AC voltage frequency of the single-phase photovoltaic energy storage power modules (IPM) in each of the photovoltaic energy storage devices (100) through the microprocessor (DSP) by the first synchronous signal module (STS1);
controlling the first switch module (S1 and S2) in each of the photovoltaic energy storage devices (100) through the microprocessor (DSP) by the second synchronous signal module (STS2); and
controlling the second switch module(S3) in each of the photovoltaic energy storage devices (100) through the microprocessor (DSP) by the third synchronous signal module (STS3).

4. The control method according to Claim 1, wherein the operation of acquiring the sum of the maximum discharge power of each of the energy storage batteries comprises:
determining the maximum discharge power of each of the groups of energy storage batteries according to a preset constant power charge and discharge instruction, executed by the photovoltaic energy storage master(100A).

5. The control method according to Claim 1, wherein the photovoltaic energy storage devices (100) are further provided with isolated communication modules (CAN) which are connected to a CAN bus to realize the communication connection of each of the photovoltaic energy storage devices (100),
the operation of adjusting the grid-connected power of the grid comprises:
sending the grid-connected power of the grid to the grid so that the grid adjusts the current grid-connected power, executed by the photovoltaic energy storage master(100A).

6. The control method according to Claim 2, wherein when the grid is not connected to the parallel photovoltaic energy storage system (10), the method further comprises the following operation before the operation of adjusting the output power of each of the photovoltaic energy storage slaves(100B) so that the photovoltaic energy storage device (100) supplies power for the load in an off-grid manner:
disconnecting each of the second switch modules(S3), and controlling each of the first switch modules (S1 and S2) to be closed so that the photovoltaic energy storage device(100) supplies power for the load in an off-grid manner, executed by the photovoltaic energy storage master(100A).

7. The control method according to Claim 1, wherein each of the photovoltaic energy storage devices (100) is provided with a first synchronous signal module (STS1), and each of the first synchronous signal modules (STS1) is connected to a first synchronous bus to acquire a bus square wave through the first synchronous bus; the operation of adjusting the output of the single-phase photovoltaic energy storage power module (IPM) in the photovoltaic energy storage slave (100B) so that the photovoltaic energy storage master (100A) and each of the photovoltaic energy storage slaves (100B) synchronously perform output comprises:
executing following steps by the photovoltaic energy storage slaves (100B):
acquiring the AC voltage output of the single-phase photovoltaic energy storage power module (IPM) in the photovoltaic energy storage slave (100B);
calculating a phase difference between the rising edge of the bus square wave and the AC voltage at the same time;
inputting the phase difference to a PID controller in the single-phase photovoltaic energy storage power module (IPM) in the photovoltaic energy storage slave (100B) to adjust a carrier value of a pulse width modulation signal of an inverter in the single-phase photovoltaic energy storage power module (IPM) in the photovoltaic energy storage slave (100B), so that the frequency of each of the photovoltaic energy storage slaves (100B) is synchronous with that of the photovoltaic energy storage master (100A).

8. The control method according to Claim 7, wherein each of the photovoltaic energy storage devices (100) is provided with an isolated communication module (CAN) that is connected to a CAN bus, and the method further comprises:
executing following steps by the photovoltaic energy storage slaves slaves (100B):
acquiring the power limit value issued by the photovoltaic energy storage master(100A) and the total power of the parallel photovoltaic energy storage system (10) through the CAN bus;
calculating the average power of the photovoltaic energy storage slaves(100B);
controlling the power of the photovoltaic energy storage slaves (100B) in a closed loop according to the power limit value, the total power and the average power so that the photovoltaic energy storage master(100A) and the photovoltaic energy storage slaves (100B) achieve current-sharing output.

9. A parallel photovoltaic energy storage system(10), comprising a plurality of photovoltaic energy storage devices (100), each device of the plurality of photovoltaic energy storage devices (100) is paired to a photovoltaic module (PV) by means of a single-phase photovoltaic energy storage power module (IPM) and comprises a group of energy storage batteries and, the plurality of photovoltaic energy storage devices (100) of the parallel photovoltaic energy storage system (10) being adapted to be connected in parallel to an AC grid via respective points of common coupling (PCC) and to plurality of loads, wherein the loads comprise at least one emergency load and at least one common load, wherein each of the at least one emergency load is connected with the output ends of each device of the plurality of photovoltaic energy storage devices (100), and the at least one common load is connected with the AC grid;
wherein the plurality of photovoltaic energy storage devices (100) are configured to execute the control method of a parallel photovoltaic energy storage system (10) according to any one of Claims 1-8.

## Patentansprüche

1. Steuerungsverfahren eines parallelen Photovoltaik-Energiespeichersystems(10), das eine Vielzahl von Photovoltaik-Energiespeichervorrichtungen(100) umfasst, wobei jede Vorrichtung der Vielzahl von Photovoltaik-Energiespeichervorrichtungen (100) mittels eines einphasigen Photovoltaik-Energiespeicher-Leistungsmoduls (IPM) mit einem Photovoltaikmodul (PV) gekoppelt ist
und
eine Gruppe von Energiespeicherbatterien und eine Vielzahl von Photovoltaik-Energiespeichervorrichtungen(100) des parallelen Photovoltaik-Energiespeichersystems(10) umfasst, die so angepasst sind, dass sie über entsprechende gemeinsame Kopplungspunkte (PCC) parallel an ein Wechselstromnetz und an eine Vielzahl von Lasten angeschlossen werden, wobei die Lasten mindestens eine Notlast und mindestens eine gemeinsame Last umfassen, wobei jede der mindestens einen Notlast mit den Ausgangsenden jeder Vorrichtung der Vielzahl von Photovoltaik-Energiespeichervorrichtungen (100) verbunden ist, und die mindestens eine gemeinsame Last mit dem Wechselstromnetz verbunden ist,
wobei das Verfahren Folgendes umfasst:
Auswählen einer der Vielzahl von Photovoltaik-Energiespeichervorrichtungen (100) als Photovoltaik-Energiespeicher-Master(100A) und Annehmen der anderen Photovoltaik-Energiespeichervorrichtungen (100) als Photovoltaik-Energiespeicher-Slaves (100B);
Durchführen folgender Schritte durch den Photovoltaik-Energiespeicher-Master (100A):
Bestimmen, ob das Netz an das parallele Photovoltaik-Energiespeichersystems (10) angeschlossen ist oder nicht;
wenn das Netz an das parallele Photovoltaik-Energiespeichersystem (10) angeschlossen ist, Erfassen der Leistung der Lasten, einer Summe der Stromerzeugungsleistung der Photovoltaikmodule (PV) und einer Summe der maximalen Entladeleistung jeder der Energiespeicherbatterien;
Berechnen einer netzgekoppelten Leistung des Netzes nach der Summe der Stromerzeugungsleistung, der Summe der maximalen Entladeleistung und der Leistung der Lasten;
Anpassen der netzgekoppelten Leistung des Netzes und einer Ausgangsleistung jedes der Photovoltaik-Energiespeicher-Slaves (100B) entsprechend der Leistung der Lasten, der Stromerzeugungsleistung jedes der jeweiligen Photovoltaikmodule (PV) und der Leistung jeder der jeweiligen Gruppen von Energiespeicherbatterien, so dass das Netz, der Photovoltaik-Energiespeicher-Master (100A) und die Photovoltaik-Energiespeicher-Slaves (100B) Strom für die mindestens eine Notlast liefern,
und das Netz liefert weiterhin Strom für die mindestens eine gemeinsame Last,
wobei der Vorgang der Anpassung der Ausgangsleistung jedes der Photovoltaik-Energiespeicher-Slaves (100B) Folgendes umfasst:
Aufnehmen des Arbeitsstroms des Netzes durch den gemeinsamen Koppelpunkt (PCC) des Netzes mit jeder der Photovoltaik-Energiespeichervorrichtungen (100), um eine Leistung des Netzes zu erhalten;
Erfassen eines Gegenstrom-Einstellwerts des parallelen Photovoltaik-Energiespeichersystems(10), wobei die Differenz zwischen der Leistung des Netzes und dem Gegenstrom-Einstellwert als Rückkopplungswert des parallelen Photovoltaik-Energiespeichersystems(10) genommen wird;
Erwerben einer maximalen Einheitsleistung in den Photovoltaik-Energiespeichereinrichtungen(100) und eines voreingestellten Leistungsregelungs-Antwortkoeffizienten;
Berechnen eines Leistungsgrenzwerts, der an jeden der Photovoltaik-Energiespeicher-Slaves (100B) gesendet werden soll, entsprechend der maximalen Einheitsleistung, dem Leistungsregelungs-Antwortkoeffizienten und dem Rückmeldewert;
wenn das Netz nicht an das parallele Photovoltaik-Energiespeichersystem(10) angeschlossen ist, das Anpassen der Ausgangsleistung jedes der Photovoltaik-Energiespeicher-Slaves(100B) entsprechend der Leistung der Lasten, der Stromerzeugungsleistung jedes der Photovoltaikmodule(PV) und der Leistung jeder der Gruppen von Energiespeicherbatterien, so dass der Photovoltaik-Energiespeicher-Master(100A) und die Photovoltaik-Energiespeicher-Slaves (100B) die mindestens eine Notlast netzunabhängig mit Strom versorgen;
Durchführen folgender Schritte durch die Photovoltaik-Energiespeicher-Slaves (100B):
Anpassen der Leistung des einphasigen Photovoltaik-Energiespeicher-Leistungsmoduls (IPM) im Photovoltaik-Energiespeicher-Slave(100B) entsprechend dem vom Photovoltaik-Energiespeicher-Master(100A) ausgegebenen Leistungsgrenzwert des Photovoltaik-Energiespeicher-Slaves(100B), so dass der Photovoltaik-Energiespeicher-Master(100A) und jeder der Photovoltaik-Energiespeicher-Slaves(100B) synchron Leistung erbringen.

2. Steuerverfahren nach Anspruch 1, wobei jede Vorrichtung der Photovoltaik-Energiespeichervorrichtungen (100) mit mindestens drei synchronen Signalmodulen (STS) und einem ersten Schaltmodul (S1 und S2) versehen ist, das zwischen der mindestens einen Notlast und dem einphasigen Photovoltaik-Energiespeicher-Leistungsmodul (IPM) und einem zweiten Schaltmodul (S3) verbunden ist, das zwischen dem ersten Schaltmodul (S1 und S2) und dem Netz verbunden ist;
wobei das Verfahren ferner Folgendes umfasst:
Durchführen folgender Schritte durch den Photovoltaik-Energiespeicher-Master (100A):
Steuern der elektrischen Verbindung der mindestens einen Notlast, der mindestens einen gemeinsamen Last und des Netzes mit dem einphasigen Photovoltaik-Energiespeicher-Leistungsmodul (IPM) durch das erste Schaltmodul (S1 und S2) ;
Steuern der elektrischen Verbindung der mindestens einen gemeinsamen Last und des Netzes mit dem einphasigen Photovoltaik-Energiespeicher-Leistungsmodul (IPM) durch das zweite Schaltmodul (S3).

3. Steuerungsverfahren nach Anspruch 2, wobei, wenn die Photovoltaik-Energiespeichervorrichtungen(100) drei synchrone Signalmodule(STS) umfasst, die ersten synchronen Signalmodule(STS1) in jeder der Photovoltaik-Energiespeichervorrichtungen(100) durch einen ersten synchronen Bus verbunden sind, die zweiten synchronen Signalmodule(STS2) in jeder der Photovoltaik-Energiespeichervorrichtungen(100) durch einen zweiten synchronen Bus verbunden sind und die dritten synchronen Signalmodule(STS3) in jeder der Photovoltaik-Energiespeichereinrichtungen(100) durch einen dritten Synchronbus verbunden sind,
in jeder der Photovoltaik-Energiespeichereinrichtungen(100) das erste Synchronsignalmodul(STS1), das zweite Synchronsignalmodul(STS2) und das dritte Synchronsignalmodul(STS3) mit einem Mikroprozessor(DSP) in der Photovoltaik-Energiespeichereinrichtung(100) verbunden sind, und der Mikroprozessor(DSP) mit dem einphasigen Photovoltaik-Energiespeicher-Leistungsmodul(IPM) verbunden ist,
wobei das Verfahren ferner Folgendes umfasst:
Durchführen folgender Schritte durch den Photovoltaik-Energiespeicher-Master (100A):
Synchronisieren der Wechselspannungsfrequenz der einphasigen photovoltaischen Energiespeicher-Leistungsmodule (IPM) in jeder der Photovoltaik-Energiespeichervorrichtungen (100) durch den Mikroprozessor (DSP) durch das erste Synchronsignalmodul (STS1);
Steuern des ersten Schaltmoduls (S1 und S2) in jeder der Photovoltaik-Energiespeichervorrichtungen (100) durch den Mikroprozessor (DSP) durch das zweite Synchronsignalmodul (STS2); und
Steuern des zweiten Schaltmoduls (S3) in jeder der Photovoltaik-Energiespeichereinrichtungen (100) durch den Mikroprozessor (DSP) durch das dritte Synchronsignalmodul (STS3).

4. Steuerverfahren nach Anspruch 1, wobei der Vorgang des Erwerbs der Summe der maximalen Entladeleistung jeder der Energiespeicherbatterien Folgendes umfasst:
Bestimmen der maximalen Entladeleistung jeder der Gruppen von Energiespeicherbatterien gemäß einer voreingestellten konstanten Leistungslade- und Entladeanweisung, durchgeführt vom Photovoltaik-Energiespeicher-Master (100A).

5. Steuerverfahren nach Anspruch 1, wobei die Photovoltaik-Energiespeichervorrichtungen (100) ferner mit isolierten Kommunikationsmodulen (CAN) versehen sind, die mit einem CAN-Bus verbunden sind, um die Kommunikationsverbindung jeder der Photovoltaik-Energiespeichervorrichtungen (100) zu ermöglichen,
wobei der Vorgang der Anpassung der netzgekoppelten Leistung des Netzes Folgendes umfasst:
Senden der netzgekoppelten Leistung des Netzes an das Netz, so dass das Netz die aktuelle netzgekoppelte Leistung anpasst, durchgeführt vom Photovoltaik-Energiespeicher-Master (100A).

6. Steuerverfahren nach Anspruch 2, wobei das Verfahren, wenn das Netz nicht an die parallele Photovoltaik-Energiespeichervorrichtung (10) angeschlossen ist, ferner den folgenden Vorgang vor dem Vorgang des Anpassens der Ausgangsleistung jedes der Photovoltaik-Energiespeicher-Slaves (100B) umfasst, sodass die Photovoltaik-Energiespeichervorrichtung (100) die Last netzunabhängig mit Strom versorgt:
Trennen jedes der zweiten Schaltmodule (S3) und Steuern jedes der ersten zu schließenden Schaltmodule (S1 und S2), sodass die Photovoltaik-Energiespeichervorrichtung (100) die Last netzunabhängig, durchgeführt durch den Photovoltaik-Energiespeicher-Master (100A), mit Strom versorgt.

7. Steuerverfahren nach Anspruch 1, wobei jede der Photovoltaik-Energiespeichervorrichtungen (100) mit einem ersten synchronen Signalmodul (STS1) versehen ist und jedes der ersten synchronen Signalmodule (STS1) mit einem ersten synchronen Bus verbunden ist, um eine Busquadratwelle durch den ersten synchronen Bus zu erfassen;
der Vorgang des Anpassens der Leistung des einphasigen Photovoltaik-Energiespeicher-Leistungsmoduls (IPM) im Photovoltaik-Energiespeicher-Slave (100B), so dass der Photovoltaik-Energiespeicher-Master (100A) und jeder der Photovoltaik-Energiespeicher-Slaves (100B) synchron Leistung erbringen umfasst Folgendes:
Durchführen folgender Schritte durch die Photovoltaik-Energiespeicher-Slaves (100B):
Erfassen der Wechselspannungsausgabe des einphasigen Photovoltaik-Energiespeicher-Leistungsmoduls (IPM) im Photovoltaik-Energiespeicher-Slave (100B);
Berechnen einer Phasendifferenz zwischen der steigenden Flanke der Busquadratwelle und der Wechselspannung gleichzeitig;
Eingeben der Phasendifferenz an einen PID-Regler im einphasigen Photovoltaik-Energiespeicher-Leistungsmodul (IPM) im Photovoltaik-Energiespeicher-Slave (100B), um einen Trägerwert eines Pulsweitenmodulationssignals eines Wechselrichters im einphasigen Photovoltaik-Energiespeicher-Leistungsmodul (IPM) im Photovoltaik-Energiespeicher-Slave (100B) anzupassen, so dass die Frequenz jedes der Photovoltaik-Energiespeicher-Slaves (100B) synchron mit der des Photovoltaik-Energiespeicher-Masters (100A) ist.

8. Steuerverfahren nach Anspruch 7, wobei jede der Photovoltaik-Energiespeichervorrichtungen (100) mit einem isolierten Kommunikationsmodul (CAN) versehen ist, das an einen CAN-Bus angeschlossen ist, und das Verfahren ferner Folgendes umfasst:
Durchführen folgender Schritte durch die Photovoltaik-Energiespeicher-Slaves (100B):
Erfassen des vom Photovoltaik-Energiespeicher-Master(100A) ausgegebenen Leistungsgrenzwerts und der Gesamtleistung des parallelen Photovoltaik-Energiespeichersystems (10) über den CAN-Bus;
Berechnen der durchschnittlichen Leistung der Photovoltaik-Energiespeicher-Slaves(100B);
Regeln der Leistung der Photovoltaik-Energiespeicher-Slaves (100B) in einem geschlossenen Regelkreis entsprechend dem Leistungsgrenzwert, der Gesamtleistung und der Durchschnittsleistung, so dass der Photovoltaik-Energiespeicher-Master (100A) und die Photovoltaik-Energiespeicher-Slaves (100B) eine Stromteilungsleistung erreichen.

9. Paralleles Photovoltaik-Energiespeichersystem(10), umfassend eine Vielzahl von Photovoltaik-Energiespeichervorrichtungen (100), jede Vorrichtung der Vielzahl von Photovoltaik-Energiespeichervorrichtungen (100) ist mittels eines einphasigen Photovoltaik-Energiespeicher-Leistungsmoduls (IPM) mit einem Photovoltaikmodul (PV) gekoppelt und umfasst eine Gruppe von Energiespeicherbatterien und die Vielzahl von Photovoltaik-Energiespeichervorrichtungen (100) des parallelen Photovoltaik-Energiespeichersystems (10) ist angepasst, um über entsprechende Punkte gemeinsamer Kopplung (PCC) parallel an ein Wechselstromnetz und an eine Vielzahl von Lasten angeschlossen zu werden, wobei die Lasten mindestens eine Notlast und mindestens eine gemeinsame Last umfassen, wobei jede der mindestens einen Notlast mit den Ausgangsenden jeder Vorrichtung der Vielzahl von Photovoltaik-Energiespeichervorrichtungen (100) verbunden ist, und die mindestens eine gemeinsame Last mit dem Wechselstromnetz verbunden ist;
wobei die Vielzahl von Photovoltaik-Energiespeichervorrichtungen (100) so eingerichtet sind, dass sie das Steuerverfahren eines parallelen Photovoltaik-Energiespeichersystems (10) nach einem der Ansprüche 1 bis 8 durchführen.

## Revendications

1. Procédé de commande d'un système de stockage d'énergie photovoltaïque parallèle (10) comprenant une pluralité de dispositifs de stockage d'énergie photovoltaïque (100), chaque dispositif de la pluralité de dispositifs de stockage d'énergie photovoltaïque (100) est apparié avec un module photovoltaïque (PV) au moyen d'un module de puissance de stockage d'énergie photovoltaïque monophasé (IPM)
et
comprend un groupe de batteries de stockage d'énergie et la pluralité de dispositifs de stockage d'énergie photovoltaïque (100) du système de stockage d'énergie photovoltaïque parallèle (10) étant adaptés pour être connectés en parallèle à un réseau en CA via des points de couplage commun (PCC) respectifs et à une pluralité de charges, dans lequel les charges comprennent au moins une charge d'urgence et au moins une charge commune, dans lequel chacune de l'au moins une charge d'urgence est connectée aux bornes de sortie de chaque dispositif de la pluralité de dispositifs de stockage d'énergie photovoltaïque (100), et l'au moins une charge commune est connectée au réseau en CA,
dans lequel le procédé comprend :
la sélection de l'un de la pluralité de dispositifs de stockage d'énergie photovoltaïque (100) comme un maître de stockage d'énergie photovoltaïque (100A) et la prise des autres dispositifs de stockage d'énergie photovoltaïque (100) comme esclaves de stockage d'énergie photovoltaïque (100B) ;
l'exécution des étapes suivantes par le maître de stockage d'énergie photovoltaïque (100A) :
la détermination de si le réseau est connecté au système de stockage d'énergie photovoltaïque parallèle (10) ou non ;
lorsque le réseau est connecté au système de stockage d'énergie photovoltaïque parallèle (10), l'acquisition de la puissance des charges, d'une somme de la puissance de génération d'électricité des modules photovoltaïques (PV), et d'une somme de la puissance de décharge maximale de chacune des batteries de stockage d'énergie ;
le calcul d'une puissance connectée au réseau du réseau selon la somme de la puissance de génération d'électricité, la somme de la puissance de décharge maximale et la puissance des charges ;
l'ajustement de la puissance connectée au réseau du réseau et d'une puissance de sortie de chacun des esclaves de stockage d'énergie photovoltaïque (100B) selon la puissance des charges, la puissance de génération d'électricité de chacun des modules photovoltaïques (PV) respectifs et la puissance de chacun des groupes respectifs de batteries de stockage d'énergie de sorte que le réseau, le maître de stockage d'énergie photovoltaïque (100A) et les esclaves de stockage d'énergie photovoltaïque (100B) alimentent en puissance l'au moins une charge d'urgence, et le réseau alimente en outre en puissance l'au moins une charge commune,
dans lequel l'opération d'ajustement de la puissance de sortie de chacun des esclaves de stockage d'énergie photovoltaïque (100B) comprend :
la collecte du courant de travail du réseau traversant le point de couplage commun (PCC) du réseau avec chacun des dispositifs de stockage d'énergie photovoltaïque (100) pour obtenir une puissance du réseau ;
l'acquisition d'une valeur de réglage anti-contre-courant du système de stockage d'énergie photovoltaïque parallèle (10), en prenant la différence entre la puissance du réseau et la valeur de réglage anti-contre-courant comme une valeur de rétroaction du système de stockage d'énergie photovoltaïque parallèle (10) ;
l'acquisition d'une puissance unitaire maximale dans les dispositifs de stockage d'énergie photovoltaïque (100) et d'un coefficient de réponse de régulation de puissance prédéfini ;
le calcul d'une valeur limite de puissance devant être envoyée à chacun des esclaves de stockage d'énergie photovoltaïque (100B) selon la puissance unitaire maximale, le coefficient de réponse de régulation de puissance et la valeur de rétroaction ;
lorsque le réseau n'est pas connecté au système de stockage d'énergie photovoltaïque parallèle (10), l'ajustement de la puissance de sortie de chacun des esclaves de stockage d'énergie photovoltaïque (100B) selon la puissance des charges, la puissance de génération d'électricité de chacun des modules photovoltaïques (PV) et la puissance de chacun des groupes de batteries de stockage d'énergie de sorte que le maître de stockage d'énergie photovoltaïque (100A) et les esclaves de stockage d'énergie photovoltaïque (100B) alimentent en puissance l'au moins une charge d'urgence d'une manière hors réseau ;
l'exécution des étapes suivantes par les esclaves de stockage d'énergie photovoltaïque (100B) :
l'ajustement de la sortie du module de puissance de stockage d'énergie photovoltaïque monophasé (IPM) dans l'esclave de stockage d'énergie photovoltaïque (100B) selon la valeur limite de puissance de l'esclave de stockage d'énergie photovoltaïque (100B) diffusée par le maître de stockage d'énergie photovoltaïque (100A), de sorte que le maître de stockage d'énergie photovoltaïque (100A) et chacun des esclaves de stockage d'énergie photovoltaïque (100B) réalisent une sortie de manière synchrone.

2. Procédé de commande selon la revendication 1, dans lequel chaque dispositif des dispositifs de stockage d'énergie photovoltaïque (100) est doté d'au moins trois modules de signal synchrone (STS), et d'un premier module commutateur (S1 et S2) connecté entre l'au moins une charge d'urgence et le module de puissance de stockage d'énergie photovoltaïque monophasé (IPM) et un deuxième module commutateur (S3) connecté entre le premier module commutateur (S1 et S2) et le réseau ;
le procédé comprenant en outre :
l'exécution des étapes suivantes par le maître de stockage d'énergie photovoltaïque (100A) :
la commande de la connexion électrique de l'au moins une charge d'urgence, de l'au moins une charge commune et du réseau au module de puissance de stockage d'énergie photovoltaïque monophasé (IPM) par le premier module commutateur (S1 et S2) ;
la commande de la connexion électrique de l'au moins une charge commune et du réseau au module de puissance de stockage d'énergie photovoltaïque monophasé (IPM) par le deuxième module commutateur (S3).

3. Procédé de commande selon la revendication 2, dans lequel lorsque le dispositif de stockage d'énergie photovoltaïque (100) comprend trois modules de signal synchrone (STS), les premiers modules de signal synchrone (STS1) dans chacun des dispositifs de stockage d'énergie photovoltaïque (100) sont connectés par un premier bus synchrone, les deuxièmes modules de signal synchrone (STS2) dans chacun des dispositifs de stockage d'énergie photovoltaïque (100) sont connectés par un deuxième bus synchrone, et les troisièmes modules de signal synchrone (STS3) dans chacun des dispositifs de stockage d'énergie photovoltaïque (100) sont connectés par un troisième bus synchrone,
dans chacun des dispositifs de stockage d'énergie photovoltaïque (100), le premier module de signal synchrone (STS1), le deuxième module de signal synchrone (STS2) et le troisième module de signal synchrone (STS3) sont connectés à un microprocesseur (DSP) dans le dispositif de stockage d'énergie photovoltaïque (100), et le microprocesseur (DSP) est connecté au module de puissance de stockage d'énergie photovoltaïque monophasé (IPM),
le procédé comprenant en outre :
l'exécution des étapes suivantes par le maître de stockage d'énergie photovoltaïque (100A) :
la synchronisation de la fréquence de tension en CA des modules de puissance de stockage d'énergie photovoltaïque monophasés (IPM) dans chacun des dispositifs de stockage d'énergie photovoltaïque (100) par le biais du microprocesseur (DSP) par le premier module de signal synchrone (STS1) ;
la commande du premier module commutateur (S1 et S2) dans chacun des dispositifs de stockage d'énergie photovoltaïque (100) par le biais du microprocesseur (DSP) par le deuxième module de signal synchrone (STS2) ; et
la commande du deuxième module commutateur (S3) dans chacun des dispositifs de stockage d'énergie photovoltaïque (100) par le biais du microprocesseur (DSP) par le troisième module de signal synchrone (STS3).

4. Procédé de commande selon la revendication 1, dans lequel l'opération d'acquisition de la somme de la puissance de décharge maximale de chacune des batteries de stockage d'énergie comprend :
la détermination de la puissance de décharge maximale de chacun des groupes de batteries de stockage d'énergie selon une instruction de charge et de décharge à puissance constante prédéfinie, exécutée par le maître de stockage d'énergie photovoltaïque (100A).

5. Procédé de commande selon la revendication 1, dans lequel les dispositifs de stockage d'énergie photovoltaïque (100) sont en outre dotés de modules de communication (CAN) isolés qui sont connectés à un bus CAN pour réaliser la connexion de communication de chacun des dispositifs de stockage d'énergie photovoltaïque (100), l'opération d'ajustement de la puissance connectée au réseau du réseau comprend :
l'envoi de la puissance connectée au réseau du réseau au réseau de sorte que le réseau ajuste la puissance connectée au réseau actuelle, exécuté par le maître de stockage d'énergie photovoltaïque (100A).

6. Procédé de commande selon la revendication 2, dans lequel lorsque le réseau n'est pas connecté au système de stockage d'énergie photovoltaïque parallèle (10), le procédé comprend en outre l'opération suivante avant l'opération d'ajustement de la puissance de sortie de chacun des esclaves de stockage d'énergie photovoltaïque (100B) de sorte que le dispositif de stockage d'énergie photovoltaïque (100) alimente en puissance la charge d'une manière hors réseau :
la déconnexion de chacun des deuxièmes modules commutateurs (S3), et la commande de chacun des premiers modules commutateurs (S1 et S2) afin qu'ils soient fermés de sorte que le dispositif de stockage d'énergie photovoltaïque (100) alimente en puissance la charge d'une manière hors réseau, exécutée par le maître de stockage d'énergie photovoltaïque (100A).

7. Procédé de commande selon la revendication 1, dans lequel chacun des dispositifs de stockage d'énergie photovoltaïque (100) est doté d'un premier module de signal synchrone (STS1), et chacun des premiers modules de signal synchrone (STS1) est connecté à un premier bus synchrone pour acquérir une onde carrée de bus par le biais du premier bus synchrone ;
l'opération d'ajustement de la sortie du module de puissance de stockage d'énergie photovoltaïque monophasé (IPM) dans l'esclave de stockage d'énergie photovoltaïque (100B) de sorte que le maître de stockage d'énergie photovoltaïque (100A) et chacun des esclaves de stockage d'énergie photovoltaïque (100B) réalisent une sortie de manière synchrone comprend :
l'exécution des étapes suivantes par les esclaves de stockage d'énergie photovoltaïque (100B) :
l'acquisition de la sortie de tension en CA du module de puissance de stockage d'énergie photovoltaïque monophasé (IPM) dans l'esclave de stockage d'énergie photovoltaïque (100B) ;
le calcul d'une différence de phase entre le front montant de l'onde carrée de bus et la tension en CA en même temps ;
l'entrée de la différence de phase dans un contrôleur PID dans le module de puissance de stockage d'énergie photovoltaïque monophasé (IPM) dans l'esclave de stockage d'énergie photovoltaïque (100B) pour ajuster une valeur de porteuse d'un signal de modulation en largeur d'impulsions d'un onduleur dans le module de puissance de stockage d'énergie photovoltaïque monophasé (IPM) dans l'esclave de stockage d'énergie photovoltaïque (100B), de sorte que la fréquence de chacun des esclaves de stockage d'énergie photovoltaïque (100B) soit synchrone avec celle du maître de stockage d'énergie photovoltaïque (100A).

8. Procédé de commande selon la revendication 7, dans lequel chacun des dispositifs de stockage d'énergie photovoltaïque (100) est doté d'un module de communication (CAN) isolé qui est connecté à un bus CAN, et le procédé comprend en outre :
l'exécution des étapes suivantes par les esclaves de stockage d'énergie photovoltaïque (100B) :
l'acquisition de la valeur limite de puissance diffusée par le maître de stockage d'énergie photovoltaïque (100A) et de la puissance totale du système de stockage d'énergie photovoltaïque parallèle (10) par le biais du bus CAN ;
le calcul de la puissance moyenne des esclaves de stockage d'énergie photovoltaïque (100B) ;
la commande de la puissance des esclaves de stockage d'énergie photovoltaïque (100B) en une boucle fermée selon la valeur limite de puissance, la puissance totale et la puissance moyenne de sorte que le maître de stockage d'énergie photovoltaïque (100A) et les esclaves de stockage d'énergie photovoltaïque (100B) parviennent à une sortie à partage de courant.

9. Système de stockage d'énergie photovoltaïque parallèle (10), comprenant une pluralité de dispositifs de stockage d'énergie photovoltaïque (100), chaque dispositif de la pluralité de dispositifs de stockage d'énergie photovoltaïque (100) est apparié avec un module photovoltaïque (PV) au moyen d'un module de puissance de stockage d'énergie photovoltaïque monophasé (IPM) et comprend un groupe de batteries de stockage d'énergie et la pluralité de dispositifs de stockage d'énergie photovoltaïque (100) du système de stockage d'énergie photovoltaïque parallèle (10) étant adaptés pour être connectés en parallèle à un réseau en CA via des points de couplage commun (PCC) respectifs et à une pluralité de charges, dans lequel les charges comprennent au moins une charge d'urgence et au moins une charge commune, dans lequel chacune de l'au moins une charge d'urgence est connectée aux bornes de sortie de chaque dispositif de la pluralité de dispositifs de stockage d'énergie photovoltaïque (100), et l'au moins une charge commune est connectée au réseau en CA ;
dans lequel la pluralité de dispositifs de stockage d'énergie photovoltaïque (100) sont configurés pour exécuter le procédé de commande d'un système de stockage d'énergie photovoltaïque parallèle (10) selon l'une quelconque des revendications 1 à 8.
